# EUROPÄISCHE PATENTANMELDUNG

(11) **EP 3 211 763 A1**
(43) Veröffentlichungstag der Anmeldung: **30.08.2017**
(21) Anmeldenummer: 16157882.8
(22) Anmeldetag: 29.02.2016
(51) Int. Cl.: H02K 1/24, H02K 1/27

(54) **RELUKTANZMASCHINE MIT EINEM ROTOR MIT ZUMINDEST ZWEI UNTERSCHIEDLICHEN BLECHSCHNITTEN**

(71) Anmelder: Siemens Aktiengesellschaft, 80333 München (DE)
(72) Erfinder: Huth, Gerhard, 97618 Hohenroth-Leutershausen (DE); Rettinger, Frank, 67586 Hillesheim (DE)

(57) **Zusammenfassung**

Die Erfindung betrifft einen Rotor (5), welcher eine Vielzahl von Blechen eines ersten Blechschnitts (8,9,10,11,12,13,14, 15) und eine Vielzahl von weiteren Blechen eines zweiten Blechschnitts (8,9,10,11,12,13,14,15) aufweist, wobei der erste Blechschnitt (8,9,10,11,12,13,14,15) und der zweite Blechschnitt (3) übereinstimmende Ausnehmungen (22,23,24,25, 26,27,29) aufweisen. Ferner betrifft die Erfindung eine elektrische Maschine (42) mit einem derartigen Rotor (5), welcher Bleche (8,9,10,11,12,13,14,15) mit unterschiedlichem Blechschnitt aufweist.

## Beschreibung

Die Erfindung betrifft einen Rotor für einen Reluktanzmotor, einen Reluktanzmotor mit einem solchen Rotor, sowie ein Verfahren zum Herstellen des genannten Rotors.

Permanentmagneterregte (PM) Synchronmaschinen werden seit geraumer Zeit im breiten Spektrum der drehzahlveränderbaren Antriebe eingesetzt. Der Erfolg der PM Synchronmaschinen ist eng an die Entwicklung der Seltenerde-Magnete geknüpft, mit denen kompakte Synchronmaschinen hoher Drehmomentdichte entwickelt werden können.

In sehr hohen Stückzahlen werden PM Synchronmotoren z.B. bei Stell- und Positionierantrieben, so zum Beispiel bei Werkzeugmaschinen oder Industrierobotern, in Form von Servomotoren eingesetzt. Bei AC Servomotoren werden die Seltenerde-Magnete in der Regel direkt am Luftspalt an der Läuferoberfläche angeordnet. Zunehmend kommen PM Synchronmotoren aber auch bei Hauptantrieben zum Einsatz.

Wegen der Verfügbarkeit der Seltenerde-Rohstoffe und der deutlich ungünstigen Preisstellung ist es zunehmend notwendig, nach Alternativen zu suchen. Eine Alternative ist der Einsatz von Ferrit-Magneten, für die geringere Ressourcenprobleme bestehen. Wegen der deutlich schlechteren magnetischen Eigenschaften im Vergleich zu Seltenerde-Magnete ist es aber notwendig, die Ferrit-Magnete in den Läuferblechschnitt zu integrieren. Ein favorisiertes Design ist die V-Anordnung der Ferrit-Magnete.

Ein alternatives Motorkonzept bzw. Läuferkonzept basiert auf dem Motor mit Reluktanzläufer. Ein Rotor für einen Reluktanzmotor ist aus der US 5 818 140 A bekannt. Darin ist ein Rotor beschrieben, dessen Blechpaket aus Rotorblechen besteht bzw. dies aufweist, wobei die Rotorbleche Ausstanzungen aufweisen. Dieser Rotor ist hier auch als Vagati-Rotor bezeichnet. Durch die Ausstanzungen ergeben sich geschwungene, streifenförmige Blechabschnitte, die als Flussleitabschnitte, bzw. Flussleitpfad dienen und den magnetischen Fluss in der für die Bereitstellung der nötigen Reluktanz des Rotors nötigen Weise führen. Zwischen den einzelnen Flussleitabschnitten (Flussleitpfaden) befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute. Die Reaktanz des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, also die d-Achsen. Die Ausstanzungen zum Bereitstellen der unmagnetischen Bereiche bzw. zum Ausbilden der Flussleitabschnitte führen aber zu einer Schwächung der mechanischen Stabilität des Blechpakets.

Eine Aufgabe der Erfindung ist es einen Rotor bzw. einen Motor zusammen mit einem Herstellungsverfahren anzugeben, bei dem Rotor bzw. Motor effizient sind und/oder kostengünstig herstellbar sind.

Eine Lösung der Aufgabe wird durch einen Rotor gemäß Patentanspruch 1, bzw. bei einer elektrischen Maschine gemäß Patentanspruch 9 gelöst. Eine elektrische Maschine kann beispielsweise als Antrieb für ein Fahrzeug dienen. Vorteilhafte Weiterbildungen der Erfindung sind durch die Unteransprüche gegeben.

Ein Rotor weist eine Vielzahl von Blechen eines ersten Blechschnitts und eine Vielzahl von weiteren Blechen eines zweiten Blechschnitts auf, wobei der erste Blechschnitt und der zweite Blechschnitt übereinstimmende Ausnehmungen aufweisen. So kann einerseits ein einfacher konstruktiver Aufbau des Rotors (auch Läuferaufbau genannt) erzielt werden, als auch andererseits ein rotorinterner Streufluss (auch läuferinternen Streufluss genannt) limitiert werden. Der Rotor (auch Läufer genannt) wird z.B. aus zumindest zwei Rotorblechvarianten (z.B. erster Blechschnitt und zweiter (weiterer) Blechschnitt) aufgebaut. Der erste Blechschnitt betrifft also ein erstes Rotorblech eines Typs A (auch Läuferblech A genannt) und der zweite Blechschnitt ein zweites Rotorblech eines Typs B (auch Läuferblech B genannt). Hieraus ist ein Rotorblechpaket aufbaubar. Dabei weist z.B. der erste Blechschnitt nur innere Streustege auf und der zweite Blechschnitt nur äußere Streusteqe. Der Rotor ist der Rotor einer elektrischen Maschine und dort drehbar gelagert. Die elektrische Maschine ist insbesondere eine Reluktanzmaschine, also eine elektrische Maschine mit Reluktanzläufer, welche beispielsweise eine zusätzliche Magneterregung, insbesondere eine Ferritmagneterregung, aufweist.

Der beschriebene Rotor ist insbesondere ein Reluktanzrotor, d.h. er ist für einen Reluktanzmotor vorgesehen. Der Rotor weist in einer Ausgestaltung ein Blechpaket, also einen Stapel aus mehreren elektrisch voneinander isolierten, weichmagnetischen Rotorblechen auf, die sich jeweils radial von einer Rotationsachse des Rotors weg erstrecken. Mit anderen Worten sind die Rotorbleche entlang der Rotationsachse geschichtet. Jede Schicht des Blechpakets weist also ein magnetisch leitfähiges Rotorblech auf, wobei durch beispielsweise Ausstanzungen mehrere Flussleitabschnitte für einen magnetischen Fluss gebildet sind. Die Flussleitabschnitte sind insbesondere streifenförmig und/oder verbinden zwei in Umfangsrichtung benachbarte d-Achsen des Rotors. Die Flussleitabschnitte sind jeweils voneinander durch einen unmagnetischen Bereich getrennt, also beispielsweise die ausgestanzten Aussparungen. Die unmagnetischen Bereiche wirken als magnetische Flusssperren und erstrecken sich bevorzugt jeweils zwischen zwei in Umfangsrichtung benachbarten q-Achsen des Rotors. Unter magnetisch wird hier insbesondere ferromagnetisch, bevorzugt weichmagnetisch, verstanden. Entsprechend wird unter unmagnetisch oder amagnetisch hier nicht-ferromagnetisch, insbesondere nicht-weichmagnetisch verstanden. Die unmagnetischen Bereiche sind hierzu insbesondere jeweils mit Luft oder einem Polymer, insbesondere Kunstharz, gefüllt.

In einer Ausgestaltung des Rotors sind die Bleche des ersten Blechschnitts und die Bleche des weiteren Blechschnitts elektrisch voneinander isoliert und/oder radial von einer Rotationsachse des Rotors weg erstreckenden geschichtet.

In einer Ausgestaltung des Rotors weisen die Bleche eine Vielzahl von Flussleitabschnitten auf, welche durch Ausnehmungen voneinander getrennt sind.

In einer Ausgestaltung des Rotors weist der erste Blechschnitt einen Steg auf, welcher Ausnehmungen voneinander trennt.

In einer Ausgestaltung des Rotors weist der zweite Blechschnitt Ausnehmungen auf, welche über einen Umfang des Blechs radial geschlossen sind.

In einer Ausgestaltung des Rotors wechseln sich Bleche des ersten Blechschnitts (z.B. A) und weitere Bleche des zweiten Blechschnitts (z.B. B) ab. Dies kann beispielsweise zu folgenden Abfolgen führen:
- ABABABABAB...
- AABBAABBAABBAA...
- AAABAAABAAAB....

Bei drei verschiedenen Blechschnitten A, B und C kann z.B. folgende Abfolge realisiert sein: ABCABCABC....

In einer Ausgestaltung des Rotors befinden sich in den Ausnehmungen Magnete, wie z.B. Ferritmagnete. Es können auch Seltenerdenmagnete verwendet werden.

In einer Ausgestaltung des Rotors erstrecken sich die Magnete über Bleche des ersten Blechschnitts und des weiteren/zweiten Blechschnitts hinweg. Die Magnete haben also eine axiale Ausdehnung über einzelne Bleche hinweg, insbesondere über Bleche unterschiedlichen Blechschnitts hinweg. Durch die Magnete kann das Verhalten der Reluktanzmaschine verbessert werden.

Eine elektrische Maschine ist derart ausbildbar, dass diese einen Rotor aufweist, welcher Bleche mit unterschiedlichem Blechschnitt aufweist. Der Rotor ist beispielsweise ein Rotor eines obig beschriebenen Typs oder eines nachfolgend beschriebenen Typs.

In einer Ausgestaltung der elektrischen Maschine ist der Rotor permanenterregt. Der Rotor weist also Permanentmagnete, wie z.B. Ferritmagnete auf.

Die Erfindung ist im Folgenden anhand von Ausführungsbeispielen näher erläutert. Hierzu zeigen:
- FIG 1: einen Schnitt durch eine elektrische Maschine;
- FIG 2: ein Rotorblechpaket;
- FIG 3: einen ersten Blechschnitt;
- FIG 4: den zweiten Blechschnitt mit Magneten;
- FIG 5: einen dritten Blechschnitt ohne radial äußere Streustege;
- FIG 6: einen vierten Blechschnitt mit radial äußeren Streustegen;
- FIG 7: einen fünften Blechschnitt mit radial äußeren Streustegen und mit Magneten;
- FIG 8: einen sechsten Blechschnitt ohne radial äußere Streustege;
- FIG 9: einem siebten Blechschnitt mit radial äußeren Streustegen;
- FIG 10: ein beschichtetes Blech; und
- FIG 11: eine Abfolge von Blechen.

Bei den im Folgenden erläuterten Ausführungsbeispielen stellen die beschriebenen Komponenten der Ausführungsformen jeweils einzelne, auch unabhängig voneinander zu betrachtende Merkmale der Erfindung dar, welche die Erfindung jeweils auch unabhängig voneinander weiterbilden und damit auch einzeln oder in einer anderen als gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

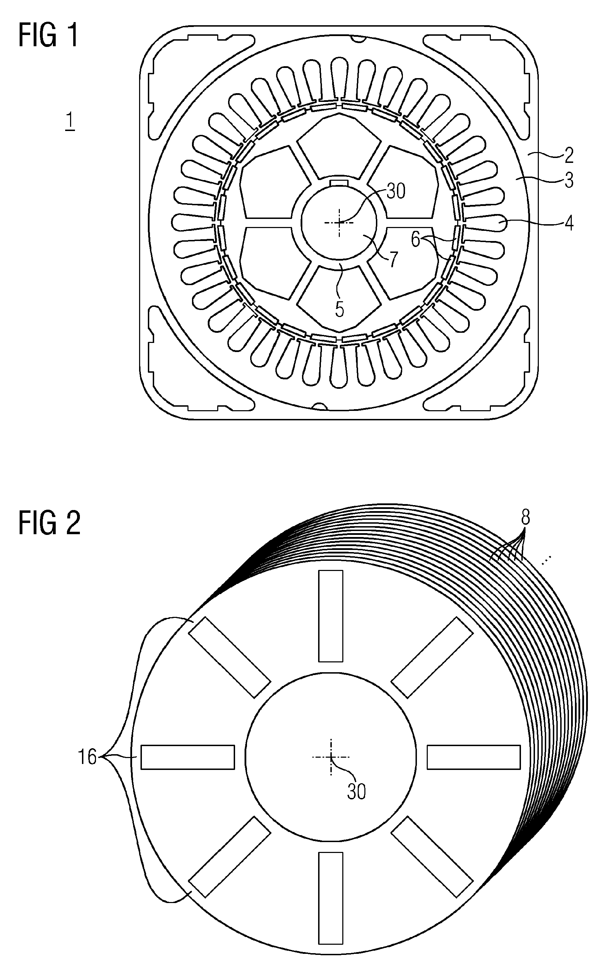

Die Darstellung nach FIG 1 zeigt einen Schnitt durch eine elektrische Maschine 1 mit einem Gehäuse 2. Die elektrische Maschine 1 ist beispielsweise ein AC-Servomotor mit am Luftspalt angeordneten Permanentmagneten 6. Die Permanentmagnete sind beispielsweise mit einer Bandage umwickelt. Gezeigt ist auch ein Reluktanzrotor oder kurz Rotor 5 genannt. Der Rotor 5 ist in einen Reluktanzmotor 1 eingebaut. Der Reluktanzmotor 1 kann beispielsweise ein Antriebsmotor für ein elektrisch angetriebenes Kraftfahrzeug oder ein Schiff sein. Im eingebauten Zustand ist durch eine Durchgangsöffnung 7 des Rotors 5 eine in FIG 1 nicht dargestellte Welle des Reluktanzmotors gesteckt. Die Welle und damit der Rotor 5 ist dann um eine Rotationsachse 30 drehbar gelagert, so dass der Rotor 5 in einem Stator 3 (mit Statornuten 4) des Reluktanzmotors 1 eine Rotation um die Rotationsachse 30 vollführen kann. Der Rotor 5 weist als magnetisch aktives Teil Permanentmagnete 6 auf.

Die Darstellung nach FIG 2 zeigt ein Rotorblechpaket mit einer Vielzahl von Rotorblechen 8 und radial äußeren Streustegen 16 um eine Rotationsachse 30. Die radial äußeren Streustege 16 begrenzen radial außen Ausnehmungen. Durch die Ausnehmungen bilden sich Taschen aus. In diesen Taschen können Ferrit-Magnete in einer V-Anordnung im Rotor positioniert werden. Das Blechpaket des Rotors ist also aus Schichten gebildet, die jeweils insbesondere weichmagnetisches, insbesondere ferromagnetisches, Material aufweisen. Zwischen den Schichten befindet sich insbesondere jeweils eine elektrisch isolierende Schicht, um Wirbelströme in dem Blechpaket zu blockieren.

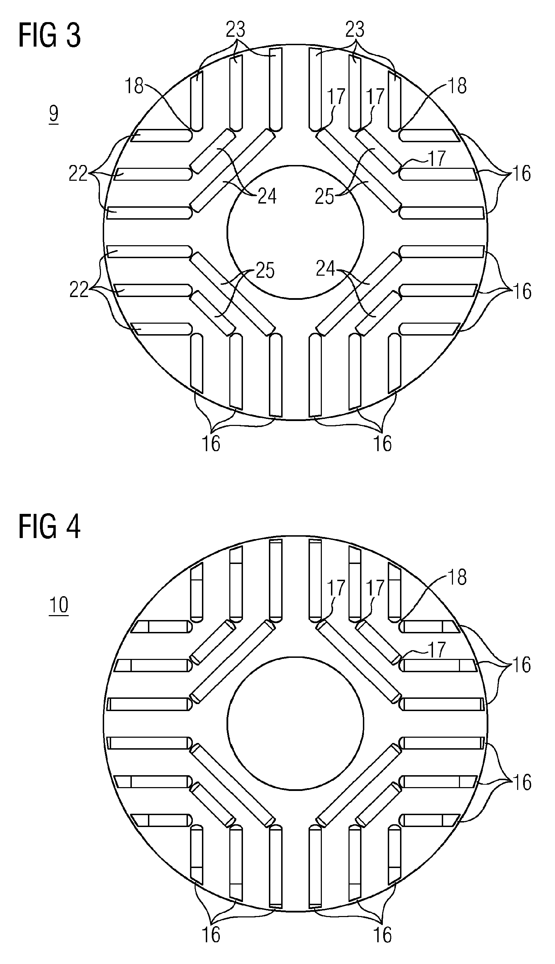

Die Darstellung nach FIG 3 zeigt einen ersten Blechschnitt 9, welcher von einer reinen radialen Ausrichtung von Ausnehmungen, wie in FIG 2 dargestellt, abweicht. Nach FIG 3 ist prinzipiell ein alternatives Rotorkonzept gezeigt, welches auf einem Reluktanzläufer mit innenliegenden Flusssperren basiert. Werden die Flusssperren beispielsweise zusätzlich mit Ferrit-Magneten aufgefüllt, so ergibt sich ebenfalls eine Art permanentmagneterregter Synchronläufer bzw. -rotor. Ein entsprechender Schnitt ist in FIG 4 dargestellt. Im Blech 9 befinden sich Ausnehmungen 22, 23, 24 und 25. Hier kann unter dem Blech 9 auch der Blechschnitt verstanden werden, so dass sich im Blechschnitt die Ausnehmungen 22, 23, 24 und 25 befinden. Ausnehmungen können auch als Aussparungen bezeichnet werden. Die Ausnehmungen 22, 23, 24 und 25 bilden magnetische Sperren. Die Rotorbleche sind in der Weise fluchtend in dem Blechpaket axial hintereinander angeordnet, dass die Ausnehmungen 22, 23, 24 und 25 und entsprechend auch die Flussleitabschnitte axial fluchten. Die Ausnehmungen 22, 23, 24 und 25 können beispielsweise durch Ausstanzen der entsprechenden Formen aus Rotorblech gebildet sein. Die Ausnehmungen 22, 23, 24 und 25 bilden also unmagnetische Bereiche und fungieren als magnetische Flusssperren. Mittels der Flussleitabschnitte wird in dem Reluktanzmotor ein magnetischer Fluss quer zu q-Achsen des Rotors entlang einer magnetischen Vorzugsrichtung geführt, der durch elektrische Spulen des Stators erzeugt wird. In der Darstellung nach FIG 3 weisen die Ausnehmungen 22 eine waagrechte Orientierung auf. 90° versetzt dazu gibt es Ausnehmungen, welche eine senkrechte Orientierung aufweisen. Streustege 18 trennen senkrecht zueinander orientierte Ausnehmungen 22 und 23. Ausnehmungen 24 und 25 sind zu den Ausnehmungen 22 und 23 um 45° versetzt. Streustege 17 trennen die um 45° zueinander orientierten Ausnehmungen 23 und 25 bzw. 22 und 24.

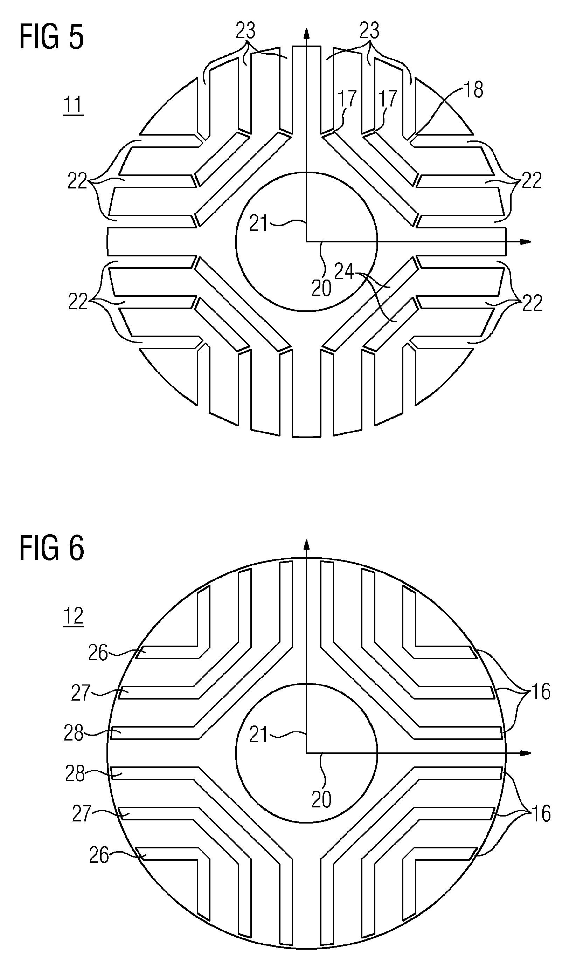

Die Darstellung nach FIG 4 zeigt einen zweiten Blechschnitt 10 eines Rotors einer Reluktanzmaschine mit Magneten, insbesondere Ferrit-Magneten, welche in den Ausnehmungen positioniert sind. Die Ferrit-Magnete befinden sich also in den Ausnehmungen, welche die Flusssperren darstellen. Weist das Rotorblechpaket nur Bleche mit einem Blechschnitt auf, welcher am äußeren radialen Rand Streustege 16 aufweist, so ist dies zwar in der Fertigung des Rotorblechpaketes einfach darstellbar, jedoch können die elektrischen bzw. magnetischen Eigenschaften weiter verbessert werden. Weist ein Rotorblechpaket nur Rotorbleche mit einem Blechschnitt auf, welches in Umfangsrichtung immer bei allen Blechen Streustege aufweist (siehe FIG 3 bzw. 4), so kann ein derartiges Läuferkonzept mit permeablen Streustegen einen deutlichen Anteil des Permanentmagnetflusses läuferintern kurzschließen. Ein Läuferdesign das einerseits konstruktiv einfach ist und andererseits nur einen möglichst kleinen Streufluss zur Folge hat kann deswegen besser sein. Bei einem derartigen Läuferdesign (Rotordesign) können sich unterschiedliche Blechschnitte abwechseln. Beispielsweise ein Blech mit einem Blechschnitt nach FIG 3 und ein Blech mit einem Blechschnitt nach FIG 5.

Die Darstellung nach FIG 5 zeigt einen dritten Blechschnitt 11 ohne radial äußere Streustege. Die in FIG 4 nach dem zweiten Blechschnitt 10 vorhandenen Streustege 16 sind radial am äußeren Rand des Blechs und im Blechschnitt 11 nach FIG 5 nicht mehr vorhanden. Der Blechschnitt 11 nach FIG 5 weist also radial nach außen geöffnete Ausnehmungen 22 und 23 auf. Die Ausnehmungen 24 sind weiterhin in der Ebene des Blechs geschlossen. Nach FIG 5 ist auch eine x-Achse 20 und eine y-Achse 21 gezeigt, welche ihren Nullpunkt in der Rotationsachse des Rotors hat, der aus Blechen eines Blechschnitts 11, oder dergleichen, ausbildbar ist.

Die Darstellung nach FIG 6 zeigt einen vierten Blechschnitt 12 mit radial äußeren Streustegen 16. Die radial äußeren Stege schließen die Ausnehmungen 26, 27 und 28 nach außen ab. Ein Rotor kann nun aus zwei Läuferblechvarianten aufgebaut werden, beispielsweise aus einer Variante A gemäß des Läuferblechs nach FIG 5 und einer Variante B gemäß des Läuferblechs nach FIG 6. Das Läuferblech nach FIG 5 (Variante A) weist nur innere Streustege 17, 18 auf. Das Läuferblech nach FIG 6 (Variante B) weist nur äußere Streusteqe 16 auf. Zum Aufbau eines Läuferblechpaketes (Rotorblechpaketes) aus den Blechvarianten gemäß Läuferblechvariante A und Läuferblechvariante B wird das Läuferblechpaket wechselschichtig gestapelt. Es werden so die notwendigen geschlossenen Fenster für die Aufnahme der Ferrit-Magnete ausgebildet, falls der Rotor Permanentmagnete aufweisen soll. Durch eine Wechselschichtung von Läuferblechvariante A und Läuferblechvariante B reduzieren sich die aktiven inneren und äußeren Streustege. So ist es möglich, trotz der stanztechnisch bedingten Mindestdicken der Streustege, die läuferinternen Streuflüsse deutlich zu reduzieren. Die Wechselschichtung von Läuferblechvariante A und Läuferblechvariante B kann in direkter Wechselfolge ...A-B-A-B-A-B... erfolgen. Zur stärkeren Reduzierung der läuferinternen Streuflüsse können jedoch auch andere Wechselschichtungen vorgenommen werden, wenn das zu keinen Festigkeitsproblemen führt. Eine weitere Schichtungsvariante ist z.B....A-A-B-A-A-B....

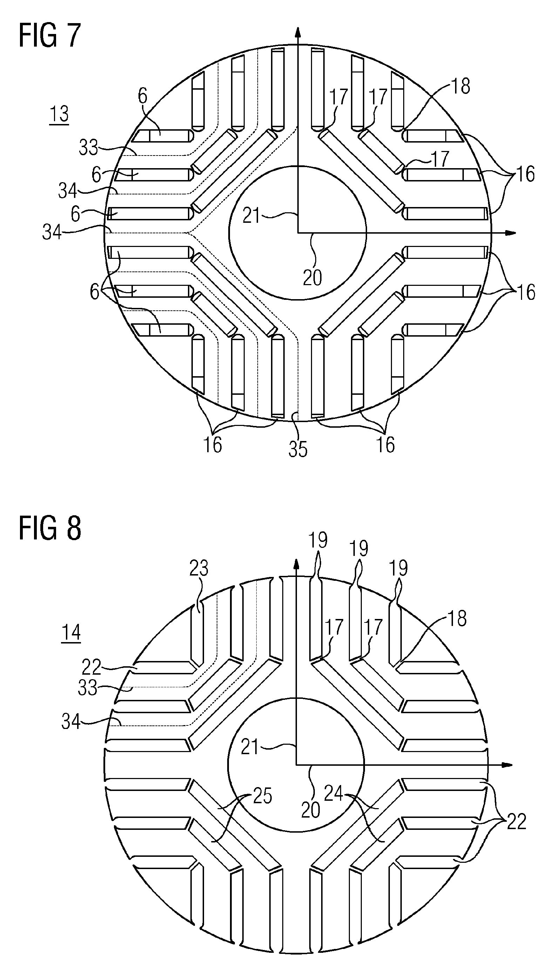

Die Darstellung nach FIG 7 zeigt einen fünften Blechschnitt 13 mit radial äußeren Streustegen 16 und mit Magneten 6. Dieser Blechschnitt kann als Variante B beispielsweise mit dem Blechschnitt nach FIG 5 als Variante A kombiniert sein. Dieser Blechschnitt kann als Variante B aber beispielsweise auch mit dem Blechschnitt nach FIG 8 als Variante A kombiniert sein. FIG 7 zeigt auch Flussleitabschnitte 33, 34 und 35, welche den magnetischen Fluss leiten.

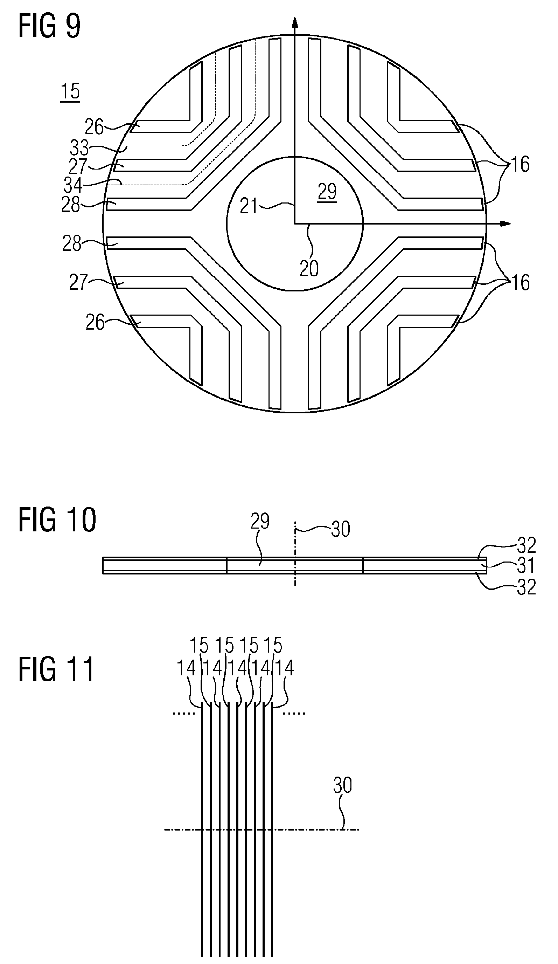

Die Darstellung nach FIG 8 zeigt einen sechsten Blechschnitt 14 ohne radial äußere Streustege und damit auch ein entsprechendes Blech 14. FIG 8 zeigt auch die Wellenausnehmung 29 für die Welle der elektrischen Maschine. Dieser Blechschnitt nach FIG 8 kann z.B. mit dem vierten Blechschnitt nach FIG 6 kombiniert werden oder mit einem siebten Blechschnitt 15 nach FIG 9. Ein Blechpaket eines Rotors (auch Läufer genannt) weist dann beispielsweise sowohl Bleche mit dem sechsten Blechschnitt 14, wie auch Bleche mit dem vierten Blechschnitt 12 auf, bzw. mit dem siebten Blechschnitt 15. Die Bleche mit diesen unterschiedlichen Blechschnitten können alternierend angeordnet sein. Ein Rotor kann auch ein Blechpaket mit nur Blechen 14 des sechsten Blechschnitts 14 aufweisen. Weist ein Rotor nur Bleche mit dem sechsten Blechschnitt 14 auf, bzw. nur Bleche ohne radial äußere Streustege, so ist ein solcher Rotor insbesondere für geringe Drehzahlen geeignet. Für geringe Drehzahlen kann es ausreichend sein das Rotorblechpaket alleine mit Blechen mit offenen radialen Nuten, also z.B. gemäß dem sechsten Blechschnitt 14 auszubilden. Ein weiteres Beispiel hierfür ist der dritte Blechschnitt 11 nach FIG 5. Wird ein Blech mit einem Blechschnitt nach FIG 8 verwendet, so sind diese Bleche der Variante A nach außen noch offen, aber im Vergleich zur Variante A nach FIG 5 teilweise geschlossen. Der Blechschnitt nach FIG 8 weist äußere Stege auf, bei welchen die Öffnung eingeengt ist. Die Einengung ergibt sich durch Stegnasen 19. Die Öffnung der Ausnehmung ist also kleiner als die sonstige bzw. durchschnittliche Breite der Ausnehmung. Ein Rotor mit Blechen der Variante B und mit Blechen der Variante A, wobei die Variante A Stegnasen aufweist, wird insbesondere für einen Rotor für hohe Drehzahlen verwendet.

Die Darstellung nach FIG 10 zeigt ein beschichtetes Blech 31. Das Blech 31 ist ein Elektroblech mit einer beidseitigen elektrisch isolierenden Beschichtung 32. Das Blech 31 ist rotationssymmetrisch bezüglich der Rotationsachse 30.

Die Darstellung nach FIG 11 zeigt eine Abfolge von Blechen 14 und 15. Die Bleche 14 sind beispielsweise von einer Variante A ohne äußere Streustege und die Bleche 15 sind beispielsweise von einer Variante B mit äußeren Streustegen.

## Patentansprüche

1. Rotor (5), welcher eine Vielzahl von Blechen eines ersten Blechschnitts (8,9,10,11,12,13,14,15) und eine Vielzahl von weiteren Blechen eines zweiten Blechschnitts (8,9,10,11,12, 13,14,15) aufweist, wobei der erste Blechschnitt (8,9,10,11, 12,13,14,15) und der zweite Blechschnitt (3) übereinstimmende Ausnehmungen (22,23,24,25,26,27,29) aufweisen.

2. Rotor (1) nach Anspruch 1, wobei die Bleche des ersten Blechschnitts (8,9,10,11,12,13,14,15) und die Bleche des weiteren Blechschnitts (8,9,10,11,12,13,14,15) elektrisch voneinander isoliert sind und radial von einer Rotationsachse (30) des Rotors (5) weg erstreckend geschichtet sind.

3. Rotor (1) nach Anspruch 1 oder 2, wobei die Bleche (8,9, 10,11,12,13,14,15) eine Vielzahl von Flussleitabschnitten (33,34,35) aufweisen, welche durch Ausnehmungen (22,23,24, 25,26,27,29) voneinander getrennt sind.

4. Rotor (1) nach einem der Ansprüche 1 bis 3, wobei der erste Blechschnitt (2) einen Steg (16,17,18) aufweist, welcher Ausnehmungen (22,23,24,25,26,27,29) voneinander trennt.

5. Rotor (1) nach einem der Ansprüche 1 bis 4, wobei der zweite Blechschnitt (2) Ausnehmungen (22,23,24,25,26,27,29) aufweist, welche über einen Umfang des Blechs (8,9,10,11,12, 13,14,15) radial geschlossen sind.

6. Rotor (1) nach einem der Ansprüche 1 bis 5, wobei sich Bleche (8,9,10,11,12,13,14,15) des ersten Blechschnitts (2) und weitere Bleche (8,9,10,11,12,13,14,15) des zweiten Blechschnitts (3) abwechseln.

7. Rotor (1) nach einem der Ansprüche 1 bis 6, wobei sich in den Ausnehmungen (22,23,24,25,26,27,29) Magnete befinden.

8. Rotor (1) nach Anspruch 7, wobei sich die Magnete (6) über Bleche des ersten Blechschnitts und des zweiten Blechschnitts (8,9,10,11,12,13,14,15) erstrecken.

9. Elektrische Maschine (42) mit einem Rotor (5), welcher Bleche (8,9,10,11,12,13,14,15) mit unterschiedlichem Blechschnitt aufweist.

10. Elektrische Maschine 42) nach Anspruch 9, wobei der Rotor (5) permanenterregt ist.

11. Elektrische Maschine (42) nach Anspruch 9 oder 10, wobei der Rotor (5) nach einem der Ansprüche 1 bis 8 ausgebildet ist.
